# EUROPEAN PATENT APPLICATION

(11) **EP 0 881 088 A1**
(43) Date of publication of application: **02.12.1998**
(21) Application number: 97939232.1
(22) Date of filing: 09.09.1997
(51) Int. Cl.: B41K 1/32, G06T 11/00

(54) **STAMP PRODUCING APPARATUS WHICH FORMS EDITED PATTERN ON STAMP SURFACE OF UNCOMPLETED STAMP**

(30) Priority: 11.09.1996 JP 240214/96; 13.03.1997 JP 59166/97
(71) Applicant: SEGA ENTERPRISES, LTD., Tokyo 144-8531 (JP)
(72) Inventor: CHOSOKABE, Jun,Data East Corporation, Tokyo 167 (JP); SHIBA, Hiroyuki,Data East Corporation, Tokyo 167 (JP)
(74) Representative: Kirschner, Klaus Dieter, Dipl.-Phys.
(86) International application number: JP9703170
(87) International publication number: WO9810936

(57) **Abstract**

A stamp fabricating apparatus enabling many and unspecified persons having no experience of operation on the apparatus to fabricate a desired stamp with simple operations. After a coin thrown into the apparatus is detected by a coin detector 10, image data representative of design samples available to a stamp surface size of a stamp to be fabricated are read from a storage unit 2 in response to a predetermined operation. With the read image data displayed on a display unit 8, a design is edited in an image processing unit 8 for the stamp surface of the stamp. The unprocessed stamp surface of the stamp is then engraved on the basis of the produced design in a stamp surface engraving unit 13.

## Description

### TECHNICAL FIELD

The present invention relates generally to a stamp fabricating apparatus, and more particularly to a stamp fabricating apparatus of a type which selectively delivers a stamp having an arbitrary stamp surface size and a stamp color in response to a monetary value medium thrown thereinto by a user and engraves a desired design on the stamp surface of the delivered stamp, thus providing the user with a complete stamp.

### BACKGROUND ART

Conventionally, stamp fabricating apparatuses have been proposed for engraving a design desired by a user on the stamp surface to fabricate a stamp. For example, Japanese Laid-open Patent Application No. 6-278350 discloses a stamp fabricating apparatus which allows the user to select any of a plurality of stamps having a variety of stamp surface sizes and to have the apparatus engrave a desired design on the stamp surface of a selected stamp.

The conventional stamp fabricating apparatuses, when fabricating a stamp, receive key operations from the user for inputting stamp type information including a stamp surface size and a stamp surface configuration of a selected stamp, and then the user specifies a portion of image data to be used as a design for the stamp surface, based on the contour of the stamp defined by the inputted stamp type information.

The conventional stamp fabricating apparatus as mentioned above requires the user, when attempting to fabricate a stamp, to input stamp type information through key operations in accordance with a stamp surface size of a selected stamp and to specify a portion of image data to be used as a design for that stamp surface based on the contour of the inputted stamp type information. Thus, the apparatus has a problem that excessively complicated operations are forced to the user to fabricate a stamp. Particularly, this kind of stamp fabricating apparatus is not appropriate as a stamp fabricating apparatus for many and unspecified persons, who have never experienced such operations, to operate to fabricate a stamp by throwing a monetary value medium such as a bill or a coin.

### DISCLOSURE OF INVENTION

The present invention has been made to solve the problem mentioned above, and its object is to provide a stamp fabricating apparatus which enables many and unspecified persons having no experience of operations to fabricate a desired stamp with simple operations.

To achieve the object as mentioned above, a stamp fabricating apparatus of the present invention comprises storage means for previously storing image data representative of design samples, each of the design samples including a design and/or a character string; display means for displaying arbitrary image data stored in the storage means; and control means activated by a predetermined monetary value medium thrown into the stamp fabricating apparatus for reading image data from the storage means in response to a predetermined operation, the image data including design samples each having a size corresponding to the size of an unprocessed stamp surface of a stamp to be fabricated, editing a design for the stamp surface with the read image data displayed on the display means, and engraving an edited design on the unprocessed stamp surface of the stamp.

In this stamp fabricating apparatus, image data representative of design samples appropriate to a stamp surface size of a stamp to be fabricated is read from the storage means in response to a predetermined operation after a predetermined monetary value medium has been thrown into the apparatus, a design for the stamp surface is edited with the image data displayed on the display means, and an edited design is engraved on the unprocessed stamp surface of the stamp.

Alternatively, the stamp fabricating apparatus may comprise control means for reading image data representative of design samples from the storage means in response to a predetermined operation or in response to a predetermined operation after a predetermined start signal has been received from the outside, where each of the design samples has a size corresponding to the size of an unprocessed stamp surface of a previously prepared stamp to be fabricated, editing a design for the unprocessed stamp surface of the stamp with the read image data displayed on the display means, and engraving an edited design on the unprocessed stamp surface of the previously provided stamp.

Thus, image data representative of design sample, each having a size corresponding to the size of a stamp surface of a stamp to be fabricated, is read from the storage means in response to the predetermined operation or in response to the predetermined operation after the predetermined start signal has been received from the outside, a design for the stamp surface of the stamp is edited with the image data displayed on the display means, and an edited design is engraved on the unprocessed stamp surface of the previously provided stamp.

The storage means previously may store at least image data representative of design samples for each of a variety of stamps having different stamp surface sizes, so that the control means reads image data representative of corresponding design samples from the storage means based on stamp type information on a stamp to be fabricated, where the stamp type information includes the size of the stamp surface of the stamp to be fabricated, and displays the read image data on the display means. Thus, image data representative of corresponding design samples are read from the storage means based on the stamp type information including the size of the stamp surface of the stamp to be fabricated, and displayed on the display means.

Also, the control means may deliver a desired stamp having an unprocessed stamp surface, selected from a plurality of stamps having at least different stamp surface sizes and different stamp colors, after a predetermined monetary value medium has been thrown into the stamp fabricating apparatus. Thus, a desired stamp having an unprocessed stamp surface, selected from a plurality of stamps having at least different stamp surface sizes and different stamp colors, is delivered after the predetermined monetary value medium is thrown into the apparatus.

The control means may read image data representative of corresponding design samples from the storage means based on the stamp type of a delivered stamp having an unprocessed stamp surface, and display the read image data. Thus, image data representative of corresponding design samples are read from the storage means based on the stamp type of the delivered stamp having an unprocessed stamp surface, and displayed on the display means.

The storage means may previously store image data representative of samples of complete images produced by respective stamps, when they have edited designs engraved on stamp surfaces thereof, for each of the stamps having different stamp surface sizes and stamp colors, so that the control means reads samples of complete images corresponding to respective stamps having different stamp surface sizes and different stamp colors, and displays the read samples on the display means when a stamp having an unprocessed stamp surface is selected after a monetary value medium has been thrown into the stamp fabricating apparatus. Thus, samples of complete images corresponding to the respective stamps having different stamp surface sizes and different stamp colors are read from the storage means and displayed on the display means when a stamp having an unprocessed stamp surface is selected after the monetary value medium has been thrown into the apparatus.

The stamp fabricating apparatus may comprise image input means for photographing an arbitrary object and outputting photographs as photographed image data, wherein the control means utilizes the photographed image data outputted from the image input means as a portion of the design during a design editing operation. Thus, photographed image data of the object photographed by the image input means may be utilized as a portion of the design during a design editing operation.

The image input means may sequentially photograph an arbitrary object at relatively short predetermined intervals and output a plurality of images as photographed image data. The control means displays respective photographed image data outputted from the image input means on the display means, such that any photographed image data selected by a predetermined operation from the photographed image data displayed on the display means may be utilized as a portion of the design during a design editing operation. Thus, during a design editing operation, the respective photographed image data of an object photographed sequentially by the image input means are displayed on the display means, such that any photographed image data selected by the predetermined operation from the photographed image data displayed on the display means may be utilized as a portion of the design.

The storage means may also store a plurality of different image data representative of respective parts for constituting a portrait, the image data including hair styles, contours of faces, eyes, mouths, and so on, and the control means reads the image data for each part and displays the read image data on the display means, such that a portrait composed of image data selected for respective parts of the portrait by predetermined operations may be utilized as a portion of the design during a design editing operation. Thus, during a design editing operation, image data for each part is read from the storage means and displayed on the display means, and a portrait composed of image data selected for respective parts of the portrait is utilized as a portion of the design.

After a design has been edited, the control means may preserve image data representative of the design in the storage means in response to a predetermined operation which indicates reuse of the produced design. In this event, when a stamp having an unprocessed stamp surface is subsequently selected, the control means determines stamps having a stamp surface suitable for the engraving of the preserved image data based on the size of the preserved image data contained in the storage means, and displays stamps determined as suitable as selectable stamps. Thus, after the design has been edited, image data representative of the design is preserved in the storage means in response to the predetermined operation which indicates reuse of the produced design. When a stamp having an unprocessed stamp surface is subsequently selected, stamps having a stamp surface suitable for the engraving of the preserved image data are determined based on the size of the preserved image data contained in the storage means, and stamps determined as suitable are displayed on the display means as selectable stamps.

The control means may preserve image data representative of the produced design in the storage means in response to a predetermined operation which indicates reuse of the design after the design has been edited. In this event, the control means reads the preserved image data contained in the storage means and displays the read image data on the display means as a design sample during subsequent editing of a design, and re-edits only portions of the design to which re-editing is instructed by a subsequent predetermined operation. Thus, after the design has been edited, the image data representative of the produced design is preserved in the storage means in response to the predetermined operation which indicates reuse of the design. Then, during subsequent editing of a design, the image data representative of the produced design preserved in the storage means is read and displayed on the display means as a design sample, and the design is reedited only in portions to which re-editing is instructed by the subsequent predetermined operation.

The present invention also provides an apparatus for fabricating a stamp having a stamp surface with a desired design which comprises storage means for previously storing image data representative of a plurality of designs to be formed on the stamp surface of the stamp; selecting means for selecting a desired design from the image data; stamp delivery means for delivering a stamp having an unprocessed stamp surface; design forming means for forming a design on the unprocessed stamp surface of the stamp; and control means responsive to a predetermined monetary value medium thrown into the apparatus for instructing the stamp delivery means to deliver the stamp having an unprocessed stamp surface, instructing the selecting means to select image data to be formed on the unprocessed stamp surface of the stamp, and instructing the design forming means to form a design corresponding to the selected image data on the unprocessed stamp surface of the stamp.

In this apparatus, a stamp having an unprocessed stamp surface is delivered from the stamp delivery means in response to a predetermined monetary value medium thrown into the apparatus, image data to be formed on the unprocessed stamp surface of the stamp is selected by the selecting means, and a design corresponding to the selected image dada is formed on the unprocessed stamp surface of the stamp.

The above and other features of the present invention will become more apparent when reading the folloing description with reference to the accompanying drawings.

### BRIEF DESCRIPTION OF DRAWINGS

Fig. 1 is a block diagram illustrating a stamp fabricating apparatus according to a first embodiment of the present invention;
Fig. 2 illustrates an appearance of the stamp fabricating apparatus shown in Fig. 1;
Fig. 3A is a perspective view illustrating a stamp used in the stamp fabricating apparatus of Fig. 1;
Fig. 3B is a cross-sectional view taken along a line X-X;
Fig. 4 is a flow chart illustrating various steps for executing stamp fabricating processing performed in the stamp fabricating apparatus;
Fig. 5 is an explanatory diagram illustrating an example of a display on a screen for selecting and buying a stamp;
Fig. 6 is a flow chart illustrating various steps of design editing processing in step 46 of Fig. 4;
Fig. 7 is an explanatory diagram illustrating an example of a display on a screen for selecting a design sample in step 62 of Fig. 6;
Figs. 8A shows an example of a base design; Fig. 8B illustrates a design of a combination of address and name; and
Fig. 9 is a block diagram illustrating a stamp fabricating apparatus according to a second embodiment of the present invention.

### BEST MODE FOR CARRYING OUT THE INVENTION

The present invention will hereinafter be described with reference to the accompanying drawings.

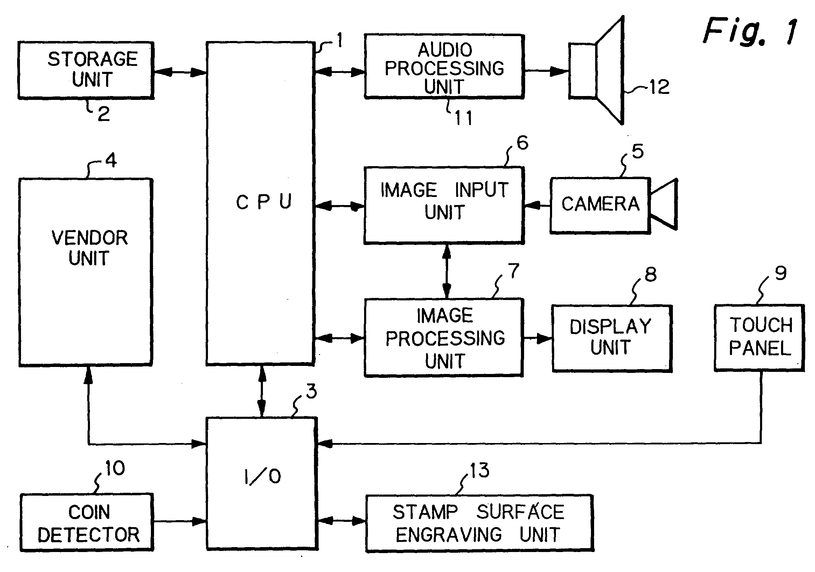

Fig. 1 is a block diagram illustrating a stamp fabricating apparatus according to a first embodiment of the present invention. The illustrated stamp fabricating apparatus comprises a CPU (control means) 1; a storage unit (storing means) 2 for storing image data including a variety of fixed designs and so on, a variety of control information including stamp types of stamps, from which the user may instruct the apparatus to deliver one through a selecting operation, and so on; an input/output interface (hereinafter called the I/O interface) 3 for communicating control signals between the CPU 1 and respective units; a coin detector 10 for detecting a monetary value medium thrown into the apparatus by the user, for example, cash, coin, prepaid card, or the like; and a vendor unit 4 for storing a variety of stamps, each having no design engraved on the stamp surface thereof, to deliver one from the stored stamps in response to an instruction from the CPU 1. The stored stamps have different stamp surface sizes, stamp colors, and configurations.

The stamp fabricating apparatus further comprises a camera 5 (image input means) for taking therein an image used as a portion of a design on the stamp surface, for example, the face, the upper half of the body, or the like of the user; an image input unit 6 (image input means) for converting an output from the camera 5 into appropriate image data; an image processing unit 7 for editing image data from the image input unit 6 and image data from the storage unit 2 to output edited image data to a display unit 8 comprising a color liquid crystal display (LCD) or the like; a touch panel 9 overlying the entire surface of the screen of the display unit 8 for detecting a stamp selecting operation, a variety of design editing operations, and so on; an audio processing unit 11 for outputting speeches such as those for guiding the user to manipulate the apparatus, operation sound, BGM (back ground music), and so on from a speaker 12; and a stamp surface engraving unit 13 for engraving a design edited in the image processing unit 7 on the stamp surface of a selected stamp with a thermal head.

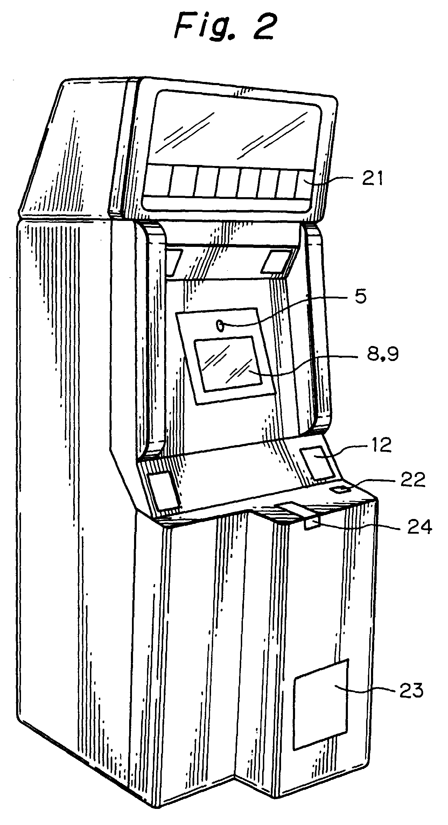

Fig. 2 illustrates an appearance of the stamp fabricating apparatus according to the present invention with a block diagram portion included therein, where identical or equivalent components to those in Fig. 1 are designated the same reference numerals.

The stamp fabricating apparatus illustrated in Fig. 2 comprises a sample display unit 21 for exhibiting samples of a plurality of stamps having a variety of stamp surface sizes, stamp colors, and configurations; a slot 22 for throwing a monetary value medium into the apparatus; the display unit 8; the touch panel 9; a stamp delivery port 23 for delivering a stamp selected by the user from the vendor unit 4 within the apparatus; a stamp setting port 24 for inserting thereinto a stamp picked up from the stamp delivery port 23 when the stamp surface of the stamp is engraved with a design; the camera 5; and the speaker 12.

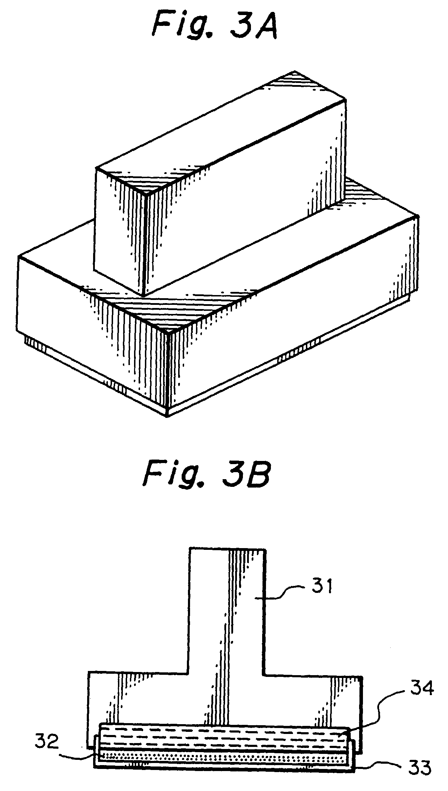

Next, Fig. 3A illustrates an appearance of a stamp, and Fig. 3B is a cross-sectional view taken along a line X-X. The illustrated stamp comprises a body portion 31; an unwoven fabric sheet 32; a thermally sensitive stencil original plate 33 on which an arbitrary design may be engraved by heating the same with a thermal head of the print surface engraving unit 13 to serve as a stamp surface; and an ink impregnator 34 in which ink is impregnated.

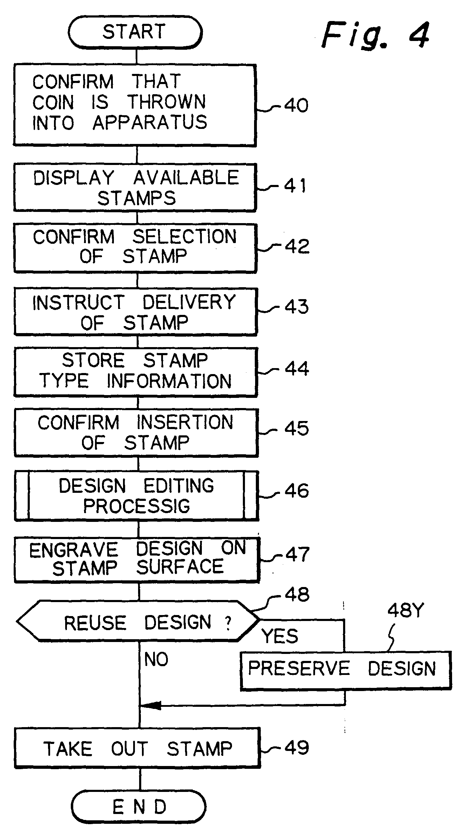

Next, the operation of the stamp fabricating apparatus according to the present invention will be described with reference to Fig. 4.

Fig. 4 is a flow chart illustrating the operation of the stamp fabricating apparatus according to the present invention.

Generally, the CPU 1 sequentially reads a series of advertisement image data including explanation on predetermined operations and so on from the storage unit 2, and repeatedly displays associated images on the display unit 8 through the image processing unit 7. When the user throws a monetary value medium, here a coin or coins, through the monetary value medium slot 22 and the coin detector 10 recognizes the coin thrown into the apparatus, the CPU 1 confirms the detection result of the monetary value medium from the coin detector 10 (step 40), reads image data related to respective stamps from the storage unit 2, displays the read image data on the display unit 8 through the image processing unit 7, and identifies stamps available to the user with the value of the coins thrown into the apparatus to prompt the user to determine a stamp having an unprocessed stamp surface, which the user desires to purchase (step 41).

Responsive to a selecting operation of the user on the touch panel 9, the CPU 1 highlights a selected one of stamps displayed on the display unit 8, reads from the storage unit 2 image data representative of samples of available stamp images possibly produced by the selected stamp, and displays the image data in a portion of the display unit 8.

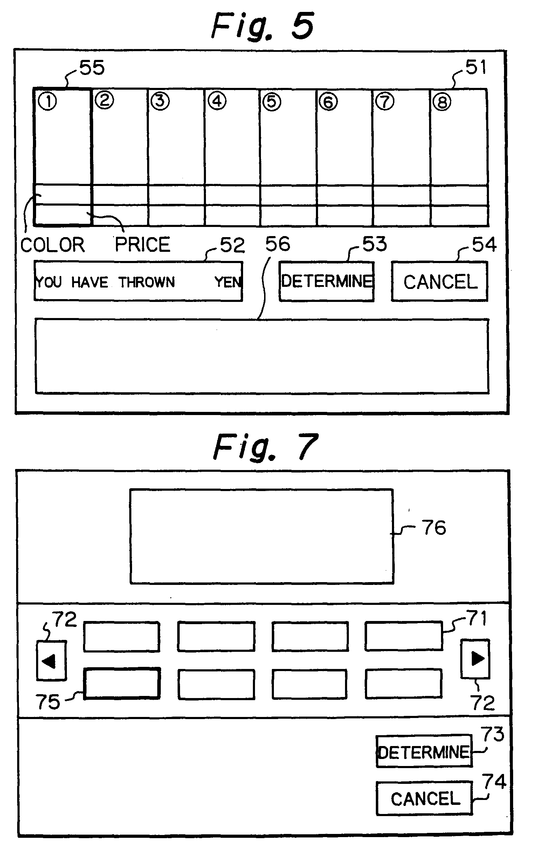

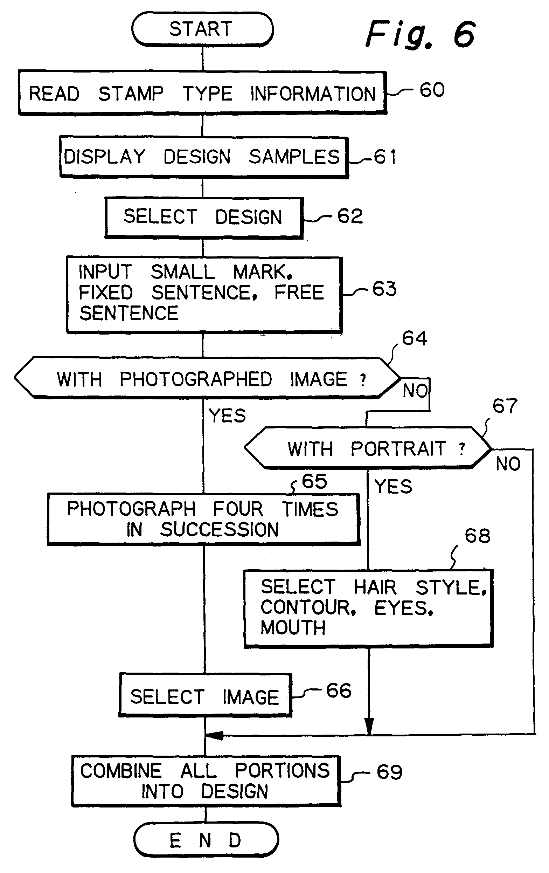

Fig. 5 illustrates an example of an image outputted on the display unit 8 during a stamp selection. A region 51 includes list windows each for displaying a configuration, stamp color, price, and so on for each of stamps having an unprocessed stamp surface stored in the vendor unit 4. A value indicating window 52 indicates the amount of money thrown into the apparatus. A decision button 53 is depressed by the user when deciding the selection of a stamp having an unprocessed stamp surface. A cancel button 54 may be depressed when the user desires to cancel previous selection. A cursor 55 is moved over the list windows 51 in response to a selecting operation of the user. An explanation window 56 displays samples of stamp images possibly produced by a stamp selected by the cursor 55.

As described above, image data representative of stamped image samples provided by respective stamps stored in the vendor unit 4 are previously stored in the storage unit 2, such that when a stamp having an unprocessed stamp surface is selected by the cursor 55, samples of actual stamp images are displayed on the display unit 8 in accordance with the stamp surface size and stamp color of the selected stamp having an unprocessed stamp surface. Thus, even at the time a design for the stamp has not been completed, the user can precisely confirm a stamp surface size, a stamp color, a design possibly limited by the stamp surface size of a selected stamp, thereby allowing the user to select a desired stamp without erroneous determination.

Then, after confirming the operation of the user on the touch panel 9 for determining the selection (step 42), the CPU 1 instructs the vendor unit 4 to delivery a stamp having an unprocessed stamp surface selected by the cursor 55 as a stamp subjected to subsequent processing (step 43), and stores the stamp type information of the delivered stamp in the storage unit 2 (step 44). In response, the vendor unit 4 delivers the specified stamp in a package from the stamp delivery port 23.

The CPU 1 also reads image data for explaining how the user operates the apparatus from the storage unit 2 and displays the image data on the display unit 8 to prompt the user to take out the stamp from the package and insert the stamp in the stamp setting port 24.

In response, the CPU 1 confirms the stamp inserted in the stamp setting port 24 by the user (step 45), and then starts processing for editing a design to be engraved on the stamp surface as illustrated in Fig. 6 (step 46).

Fig. 6 is a flow chart illustrating the design editing processing. Referring specifically to Fig. 6, the CPU 1 first reads the stamp type information stored in the storage unit 2 to confirm the type of the stamp placed in the stamp setting port 24 (step 60). Subsequently, a plurality of design samples in accordance with the stamp surface size and stamp color of the stamp are read from the storage unit 2 and displayed on the display unit 8 in reduced views (step 61) to prompt the user to select a design which may serve as a base of the stamp image.

The CPU 1 selectively displays any of the design samples displayed on the display unit 8 in response to a selecting operation of the user (step 62), and reads image data representative of a stamped image sample associated with the stamp which is displayed on a portion of the screen of the display unit 8 in full size.

Fig. 7 illustrates an example of an output image on the display unit 8 for the user to select a design for a stamp surface. The image on the display unit 8 includes list windows 71 each for displaying a design sample in reduced view; scroll buttons 72 for scrolling the list windows 71 in the left and right directions, respectively, to update design samples displayed in the respective list windows 71; a determination button 73 which is depressed by the user when determining a selected design; a cancel button 74 which may be depressed when the user desires to cancel previous selection; a cursor 75 which is moved over the list windows 71 in response to selecting operations of the user; and an explanation window 76 for displaying a stamped image sample provided by a stamp selected by the cursor 75 in full size.

As described above, the stamp type information of a delivered stamp is stored in the storage unit 2 when the stamp is delivered, such that only design samples available to the stamp surface size of the stamp are extracted from design samples previously stored in the storage unit 2 based on the stored stamp type information and displayed on the display unit 8. Therefore, the user need not take into account the stamp surface size of a stamp when the user is attempting to edit a design for the stamp, as is the case of the conventional stamp fabricating apparatus. This feature enables many and unspecified persons, having no experience of operating the apparatus, to select a design appropriate to the stamp surface size of a desired stamp only with simple operations.

After a design for the stamp surface, serving as the base, has been selected as described above, the CPU 1 reads image data representative of small symbols, fixed sentences, or the like, for forming part of the design, and displays the image data to prompt the user to select one in a manner similar to the foregoing selecting operation (step 63). Selected and inputted data are temporarily stored in the storage unit 2.

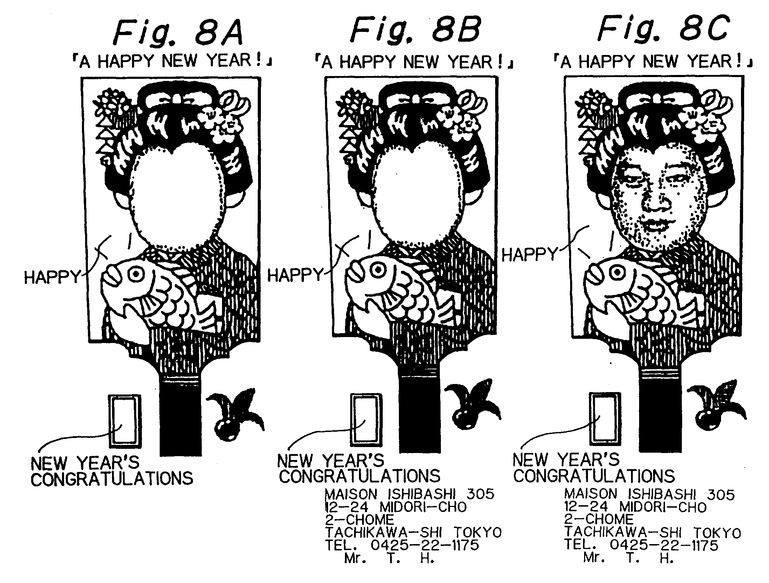

Figs. 8A - 8C are explanatory diagrams for illustrating examples of edited designs, where Fig. 8A illustrates a design selected as the base; Fig. 8B illustrates the design of Fig. 8A with free sentences such as address, name, and so on inserted therein; and Fig. 8C illustrated a complete design.

Next, the CPU 1 determines whether or not an image should be photographed for editing the selected design (step 64). If so (step 64: YES), the CPU 1 controls the image input unit 6 and the camera 5 to photograph the user or the like (step 65). In this event, an image may be photographed by the camera 5 a plurality of times at relatively short predetermined time intervals of approximately several seconds to several tens of seconds. In this embodiment, for example, an image is photographed four times in succession. Fetched image data are transferred to the image processing unit 7.

Subsequently, the CPU 1 controls the image processing unit 7 to display the image data on the display unit 8 in reduced views to prompt the user to determine which of the image data is employed as a portion of the design for the stamp surface (step 66). In response, the user selects any image data, and the selected image data is temporarily stored in the storage unit 2.

As described above, when an arbitrary image is photographed for use as a portion of a design for a stamp surface, the image is photographed a plurality of times at relatively short time intervals, from which the user is allowed to select any for use in the stamp surface, thereby making it possible to reduce a time period required to photograph the image and accordingly a time period required to create a stamp. In addition, when a face, for example, is photographed, unwanted results, for example, due to winking may be avoided by selecting the most favorable one from the plurality of photographs.

On the other hand, if it is determined at step 64 that no photographed image is required (step 64: NO), it is next determined whether or not a portrait of a person is required (step 67). If a portrait of the user is required (step 67: YES), the user is prompted to edit a portrait based on image data representative of hair styles, contours of faces, eyes, mouths, and so on which have previously stored in the storage unit 2 (step 68).

For selecting a hair style, for example, a large number of hair style data are read from the storage unit 2 for display on the display unit 8, such that the user is prompted to select image data representative of an appropriate hair style with a similar operation to that as illustrated in Fig. 7. In this way, the contour of face, eyes, mouth, and so on are sequentially selected to create a portrait of a person desired by the user, and image data representative of the created portrait is temporarily stored in the storage unit 2.

As described above, since a design for a stamp surface can employ a portrait of a person created by the user based on image data representative of hair style, contour of a face, eyes, mouth, and so on previously stored in the storage unit 2, as a portion of the design, the privacy of the user can be protected, as compared with a design employing a photograph of the user's face. In addition, it is possible to produce a design having a feeling of intimacy and warmth similar to a design including a photograph of a person's face.

After completing step 66 and step 68, if it is determined at step 67 that no portrait needs to be created (step 67: NO), the design sample appropriate to the stamp surface size, a photographed image or a created portrait, and image data representative of a small symbol, fixed sentence, free sentence, and so on, all of which have been inputted by the user, are read from the storage unit 2.

Subsequently, the photographed image is edited on the basis of the stamp surface size in the image processing unit 7, for example, by enlarging and/or reducing the image, extracting a portion of the image, or extracting characterizing portions of the face to edit the image to appear as a portrait. Then, image data representative of the entire design is edited, combined, and again stored in the storage unit 2 (step 69), thus terminating a series of steps of the design editing processing.

After executing the design editing processing (step 46 in Fig. 4), the CPU 1 reads the image data representative of the entire design preserved in the storage unit 2, transfers the read image data to the stamp surface engraving unit 13 through the I/O interface 3, and instructs the stamp surface engraving unit 13 to engrave the design on the stamp surface (step 47).

In response, the stamp surface engraving unit 13 engraves the design corresponding to the image data transferred thereto on the stamp surface of the stamp placed in the stamp setting port 24. In this event, the stamp surface of the stamp is covered with a thermally sensitive stencil original plate 33 as illustrated in Fig. 3, so that the design is engraved on the stamp surface by heating the thermally sensitive stencil original plate 33 with a thermal head.

After the design is engraved on the stamp surface, the CPU 1 inquires the user whether or not the user will reuse the image data representative of the entire design by displaying the inquiry on the display unit 8 (step 48). If the user responds to the CPU 1 that the user will reuse the image data, the image data used to engrave the design on the stamp surface is preserved in the storage unit 2 until the next stamp fabrication (step 48: YES).

Subsequently, the CPU 1 notifies the user of the completion of the stamp through a display on the display unit 8, and prompts the user to remove the stamp from the stamp setting port 24, thus terminating a series of steps of the stamp fabricating processing.

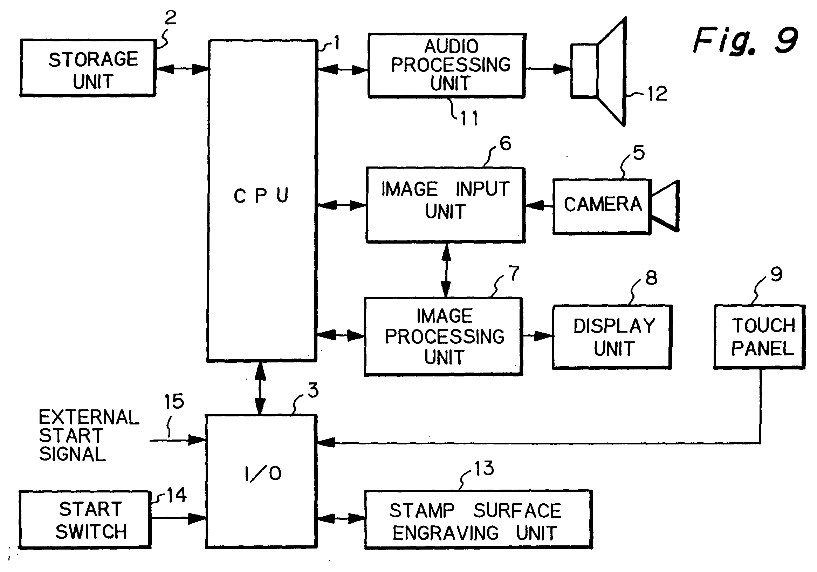

Next, a second embodiment of the present invention will be described with reference to Fig. 9.

Fig. 9 is a block diagram illustrating a stamp fabricating apparatus according to a second embodiment of the present invention which is particularly suitable for engraving a desired design on an unprocessed stamp surface of an especially prepared stamp. Thus, the second embodiment differs from the first embodiment in that means for delivering (vending) a stamp having an unprocessed stamp surface, specifically, the vendor unit 4 and the coin detector 10 are not provided.

On the other hand, the stamp fabricating apparatus of the second embodiment is provided with a start switch 14 coupled to an I/O interface 3 as means for indicating the start of stamp fabricating processing. The start switch 14 is operated by the user to indicate the start of the stamp fabricating processing.

In addition, if the start of the stamp fabricating processing is indicated from the outside, for example, if a store clerk indicates the start of the stamp fabricating processing from a counter of a store, the I/O interface 3 may be supplied with an external start signal 15, outputted by an operation on a predetermined switch disposed at a location remote from the stamp fabricating apparatus, such as on the counter of the store, as a means for indicating the start of the stamp fabricating processing.

The output of the start switch 14 or the external start signal 15 is inputted to the I/O interface 3 and detected by the CPU 1 to responsively start the aforementioned stamp fabricating processing (see Fig. 4).

In the second embodiment, since the processing for delivering a stamp having an unprocessed stamp surface is not required, the aforementioned stamp fabricating processing (see Fig. 4) is executed from step 45 as the stamp fabricating processing for an especially prepared stamp having an unprocessed stamp surface.

In this event, the stamp type information including the size of an unprocessed stamp surface of each stamp to be used may be previously set. For example, if there is one stamp surface size, corresponding stamp type information may be fixedly selected at the start of design editing processing. Alternatively, if there are a plurality of stamp surface sizes, the user may be prompted to select associated stamp type information at the start of the design editing processing.

Since the stamp fabricating processing is started in response to the start switch 14 or the external start signal 15 as described above, a desired design can be engraved on the stamp surface of a separately sold unprocessed stamp without providing means for detecting a monetary value medium such as a coin.

It should be noted that in the foregoing description, when image data is preserved in the storage unit 2 for reuse, stamps having stamp surfaces wide enough to engrave the preserved image data thereon may be determined on the basis of the size of the preserved image data within all available stamps, and the stamps determined to be appropriate for engraving the preserved image data on the surface thereof are displayed as selectable stamps, when the aforementioned available stamps are displayed (step 41). Therefore, when image data representative of an entire design is reused, it is possible to avoid erroneous selection made by the user for a stamp which cannot be used to engrave the stamp surface with the preserved image data.

Further, in the design editing processing (see Fig. 6), when design samples are displayed (step 61), preserved image data representative of an entire stamp surface is read from the storage unit 2 and displayed on the display unit 8. Then, during subsequent editing processing including photographing, portrait drawing, addition of a small symbol, insertion of a fixed sentence or a free sentence, and so on, those items to which the need of re-edit is indicated by the user are only re-edited. Thus, a stamp having the same address and name and a different image or portrait can be fabricated with simple operations, thereby facilitating the operation of the user.

### ADVANTAGES OF INVENTION

As described above, the stamp fabricating apparatus of the present invention comprises storage means for previously storing image data representative of design samples, each of the design samples including a design and/or a character string, and display means for displaying arbitrary image data stored in the storage means, so that image data representative of design samples corresponding to the size of an unprocessed stamp surface of a stamp to be fabricated are read from the storage means in response to a predetermined operation after a predetermined monetary value medium has been thrown into the apparatus, a design for the stamp surface is edited with the read image data displayed on the display means, and an edited design is engraved on the unprocessed stamp surface of the stamp.

Since image data representative of design samples appropriate to a stamp surface size of a stamp to be fabricated is read from the storage means in response to the predetermined operation after the predetermined monetary value medium has been thrown into the apparatus, and a design for the stamp surface is edited with the read image data displayed on the display means, many and unspecified persons having no experience of operation on the apparatus can fabricate a step having a desired design with simple operations.

Also, image data representative of design samples corresponding to the size of an unprocessed stamp surface of a previously provided stamp, subjected to engraving, are read from the storage means in response to a predetermined operation or in response to a predetermined operation after a predetermined start signal has been received from the outside, a design for the unprocessed stamp surface of the stamp is edited with the read image data displayed on the display means, and an edited design is engraved on the unprocessed stamp surface of the stamp.

Since image data representative of design samples corresponding to the size of an unprocessed stamp surface of a previously provided stamp, subjected to engraving, are read from the storage means in response to the predetermined operation or in response to the predetermined operation after the predetermined start signal has been received from the outside, and a design for the unprocessed stamp surface of the stamp is edited with the read image data displayed on the display means, many and unspecified persons having no experience of operation on the apparatus can fabricate a stamp having a desired design, using a previously prepared stamp having an unprocessed stamp surface, with simple operations.

Also, at least image data representative of design samples are previously stored for each of a variety of stamps having different stamp surface sizes, and image data representative of corresponding design samples are read from the storage means based on stamp type information on a stamp to be fabricated, where the stamp type information includes the size of the stamp surface of the stamp to be fabricated, and displayed on the display means, so that a design appropriate to the size of a stamp surface of a desired stamp can be selected with simple operations for any stamp having different stamp surface sizes.

Further, since a desired stamp having an unprocessed stamp surface, selected from a plurality of stamps having at least different stamp surface sizes and different stamp colors, is delivered after a predetermined monetary value medium has been thrown into the stamp fabricating apparatus, it is possible to select a stamp having an unprocessed stamp surface with a desired size and stamp color when a stamp is to be fabricated, without requiring previous provision of stamps having an unprocessed stamp surface.

Further, since image data representative of corresponding design samples are read from the storage means based on the stamp type of a delivered stamp having an unprocessed stamp surface, and displayed on the display means, the user is not required to know the size of the stamp surface of the stamp in order to supply information necessary to edit a design for the stamp surface.

Furthermore, image data representative of samples of complete images produced by respective stamps, when they have edited designs engraved on stamp surfaces thereof, are previously stored for each of the stamps having different stamp surface sizes and different stamp colors, and samples of complete images corresponding to respective stamps having different stamp surface sizes and different stamp colors are read and displayed when a stamp having an unprocessed stamp surface is selected after a monetary value medium has been thrown into the stamp fabricating apparatus. It is therefore possible for the user to correctly confirm a design or the like possibly limited by a stamp surface size, stamp color, and so on of a selected stamp, even before the design has been completed, thereby allowing the user to select a desired stamp without errors.

The stamp fabricating apparatus may also comprise image input means for photographing an arbitrary object and outputting photographs as photographed image data, such that the control means utilizes the photographed image data outputted from the image input means as a portion of a design during a design editing operation. It is therefore possible to fabricate a stamp having a design including an arbitrary object photographed by the image input means.

The image input means sequentially photographs an arbitrary object at relatively short predetermined intervals, and outputs a plurality of images as photographed image data, and the control means displays respective photographed image data outputted from the image input means on the display means, such that any photographed image data selected by a predetermined operation from the photographed image data may be utilized as a portion of a design during a design editing operation, thereby making it possible to reduce a time period required to photograph an image and accordingly a time period required to create a stamp. In addition, when a face, for example, is photographed, failed photographs, for example, due to winking can be reduced.

Furthermore, for each of parts constituting a portrait including hair style, contour of face, eyes, mouth, and so on, a plurality of different image data representative of respective parts are stored, such that image data for each part is read and displayed for selection. Then, a portrait composed of image data selected for respective parts of the portrait by predetermined operations is utilized as a portion of a design during a design editing operation, so that the privacy of the user can be protected, as compared with a design employing a photograph of the user's face. In addition, it is possible to produce a design having a feeling of intimacy and warmth similar to a design including a photograph of a person's face.

After a design has been edited, image data representative of the design is stored in the storage means in response to a predetermined operation which indicates reuse of the produced design. Then, when a stamp having an unprocessed stamp surface is subsequently selected, stamps having a stamp surface suitable for the engraving of the preserved image data are determined based on the size of the preserved image data contained in the storage means, and the stamps determined as suitable are displayed as selectable stamps. Thus, when the image data representative of the entire design is reused, the user can be prevented from erroneously selecting a stamp which is not suitable for the image data to be engraved on the stamp surface thereof.

After a design has been edited, image data representative of the produced design is preserved in the storage means in response to a predetermined operation which indicates reuse of the design, and the preserved image data is read and displayed as a design sample during a subsequent design editing operation. Then, only portions of the design to which re-editing is instructed by a subsequent predetermined operation are re-edited, so that a stamp having a design composed of, for example, the same address and name and a different image or portrait can be fabricated with simple operations, thus making it possible to reduce the amount of operations required to the user.

## Claims

1. A stamp fabricating apparatus comprising:
storage means for previously storing image data representative of design samples, each of said design samples including a design and/or a character string;
display means for displaying arbitrary image data stored in said storage means; and
control means for reading image data from said storage means in response to a predetermined operation after a predetermined monetary value medium have been thrown into said stamp fabricating apparatus, said design samples each having a size corresponding to the size of an unprocessed stamp surface of a stamp to be fabricated, editing a design for the stamp surface with said read image data displayed on said display means, and causing an edited design to be engraved on the unprocessed stamp surface of the stamp.

2. A stamp fabricating apparatus comprising:
storage means for previously storing image data representative of design samples including a variety of designs or characters;
display means for displaying arbitrary image data stored in said storage means; and
control means for reading image data representative of design samples from said storage means in response to a predetermined operation, said design samples each having a size corresponding to the size of an unprocessed stamp surface of a stamp to be fabricated, editing a design for the unprocessed stamp surface of the stamp with the read image data displayed on said display means, and causing an edited design to be engraved on the unprocessed stamp surface of the previously provided stamp.

3. A stamp fabricating apparatus comprising:
storage means for previously storing image data representative of design samples including a variety of designs or characters;
display means for displaying arbitrary image data stored in said storage means; and
control means responsive to a predetermined start signal received from the outside for reading image data from said storage means, said design samples each having a size corresponding to the size of an unprocessed stamp surface of a stamp to be fabricated, editing a design for an unprocessed stamp surface of a previously provided stamp with the read image data displayed on said display means, and causing an edited design to be engraved on the unprocessed stamp surface of the previously provided stamp.

4. A stamp fabricating apparatus according to any of claims 1 - 3, wherein:
said storage means previously stores image data representative of design samples for each of a variety of stamps having at least different stamp surface sizes; and
said control means reads image data representative of corresponding design samples from said storage means based on stamp type information on a stamp to be fabricated, said stamp type information including the size of the stamp surface of the stamp to be fabricated, and causes the read image data to be displayed on said display means.

5. A stamp fabricating apparatus according to claim 1, wherein:
said control means delivers a desired stamp having an unprocessed stamp surface, selected from a plurality of stamps having at least different stamp surface sizes, after a predetermined monetary value medium has been thrown into said stamp fabricating apparatus.

6. A stamp fabricating apparatus according to claim 1, wherein:
said control means delivers a desired stamp having an unprocessed stamp surface, selected from a plurality of stamps having at least different stamp surface colors, after a predetermined monetary value medium has been thrown into said stamp fabricating apparatus.

7. A stamp fabricating apparatus according to claim 5 or 6, wherein:
said control means reads image data having a corresponding design from said storage means based on stamp type of the delivered stamp having an unprocessed surface to cause the read data to be displayed on said display means.

8. A stamp fabricating apparatus according to claim 5 or 6, wherein:
said storage means previously stores image data representative of samples of complete images produced by respective stamps, when the respective stamps have edited designs engraved on stamp surfaces thereof, for each of the stamps having different stamp surface sizes and stamp colors; and
said control means reads samples of complete images corresponding to respective stamps having different stamps surface sizes and stamp colors, and causes the read samples to display on said display means when a stamp having an unprocessed stamp surface is selected after a monetary value medium has been thrown into said stamp fabricating apparatus.

9. A stamp fabricating apparatus according to any of claims 1 - 3, further comprising image input means for photographing an arbitrary object and outputting photographs as photographed image data,
wherein said control means utilizes said photographed image data outputted from said image input means as a portion of the design during a design editing operation.

10. A stamp fabricating apparatus according to claim 9, wherein:
said image input means sequentially photographs an arbitrary object at relatively short predetermined intervals, and outputs a plurality of images as photographed image data; and
said control means causes respective photographed image data outputted from said image input means to be displayed on said display means, such that any photographed image data selected by a predetermined operation from said photographed image data displayed on said display means is utilized as a portion of the design during a design editing operation.

11. A stamp fabricating apparatus according to any of claims 1 - 3, wherein:
said storage means stores a plurality of different image data representative of respective parts for constituting a portrait, said image data including hair styles, contours of faces, eyes, mouths, and so on; and
said control means reads said image data for each part and causeds the read image data to be displayed on said display means, such that a portrait composed of image data selected for respective parts of the portrait by predetermined operations is unitized as a portion of the design during a design editing operation.

12. A stamp fabricating apparatus according to claim 5 or 6, wherein:
after the design has been edited, said control means preserves image data representative of the design in said storage means in response to a predetermined operation which indicates reuse of the produced design; and, when a stamp having an unprocessed stamp surface is subsequently selected, said control means determines stamps having a stamp surface suitable for engraving of said preserved image data based on the size of the preserved image data contained in said storage means, and causes stamps determined as suitable to be displayed on said display means as selectable stamps.

13. A stamp fabricating apparatus according to any of claims 1 - 3, wherein:
after the design has been edited, said control means preserves image data representative of the produced design in said storage means in response to a predetermined operation which indicates reuse of the design, reads the preserved image data contained in said storage means, causes the read image data to be displayed on said display means as a design sample during a subsequent design editing operation, and re-edits only portions of the design to which re-editing is instructed by a subsequent predetermined operation.

14. An apparatus for fabricating a stamp having a stamp surface with a desired design comprising:
storage means for prestoring image data representative of a plurality of designs to be formed on the stamp surface of the stamp;
selecting means for selecting a desired design from said image data;
stamp delivery means for delivering a stamp having an unprocessed stamp surface;
design forming means for forming a design on the unprocessed stamp surface of the stamp; and
control means responsive to a predetermined monetary value medium thrown into said apparatus for causing said stamp delivery means to deliver the stamp having an unprocessed stamp surface, causing said selecting means to select image data to be formed on the unprocessed stamp surface of the stamp, and causing said design forming means to form a design corresponding to said selected image data on the unprocessed stamp surface of the stamp.
